# EUROPÄISCHE PATENTSCHRIFT

(11) **EP 3 835 092 B1**
(45) Veröffentlichungstag und Bekanntmachung des Hinweises auf die Patenterteilung: **30.08.2023**
(21) Anmeldenummer: 20213395.5
(22) Anmeldetag: 11.12.2020
(51) Int. Cl.: B60D 1/06, B60D 1/58, B60D 1/62, F16L 3/10

(54) **BEFESTIGUNGSVORRICHTUNG ZUR BEFESTIGUNG EINER LEITUNG AN EINER ANHÄNGEKUPPLUNG**
FASTENING DEVICE FOR FIXING A LINE TO A TRAILER COUPLING
DISPOSITIF DE FIXATION PERMETTANT DE FIXER UNE CONDUITE À UNE BARRE D'ATTELAGE

(30) Priorität: 13.12.2019 DE 102019134313
(43) Veröffentlichungstag der Anmeldung: 16.06.2021
(73) Patentinhaber: WESTFALIA - Automotive GmbH, 33378 Rheda-Wiedenbrück (DE)
(72) Erfinder: Gerling, Hubert, 59555 Lippstadt (DE)
(74) Vertreter: Patentanwälte Bregenzer und Reule Partnerschaftsgesellschaft mbB

(56) Entgegenhaltungen:
- EP-A1- 3 034 335
- DE-A1-102016 119 393
- DE-U1-202011 105 552
- FR-A- 1 577 220
- JP-A- 2019 187 125
- US-A- 5 337 983
- US-A1- 2010 223 765
- US-A1- 2013 160 246

## Beschreibung

Die Erfindung betrifft eine Anhängekupplung für ein Kraftfahrzeug mit einem Kupplungsarm, an dessen freiem Endbereich ein Kupplungselement, insbesondere eine Kupplungskugel, zum Anhängen eines Anhängers oder Befestigen eines Lastenträgers angeordnet ist, gemäß dem Oberbegriff des Anspruchs 1.

Anhängekupplungen mit Befestigungsvorrichtungen sind beispielsweise in DE 20 2011 105 552 U1, DE 10 2016 119 393A1 oder EP 3 034 335 A1 erläutert.

Eine Anhängekupplung weist regelmäßig zur Versorgung eines an den Kupplungsarm angekuppelten Anhängers oder eines am Kupplungsarm befestigten Lastenträgers eine Anhängersteckdose oder dergleichen andere Kontaktvorrichtung auf. Zwischen dieser Kontaktvorrichtung und einem Bordnetz des Kraftfahrzeugs, an dem die Anhängekupplung angeordnet ist, sind Leitungen erforderlich, deren Verlegung regelmäßig aufwendig ist. Beispielsweise müssen Leitungen am Kupplungsarm entlang geführt werden, wenn die Kontaktvorrichtung am Kupplungsarm angeordnet ist. Erschwert wird diese Montage noch, wenn der Kupplungsarm beweglich am Kraftfahrzeug gelagert ist, beispielsweise schwenkbeweglich. Dann müssen die Leitungen auch entsprechende Schwenkbewegungen mitmachen. Weiterhin sind in einigen Fällen auch Sensorleitungen am Kupplungsarm und Kraftfahrzeug zu verlegen, beispielsweise für einen Drehwinkelsensor, Stützlastsensor oder dergleichen. Regelmäßig werden zur Verlegung elektrischer Leitungen Kabelbinder verwendet.

Zu der Befestigung solcher Kabelbinder verwendet die Anmelderin eine Befestigungsvorrichtung der eingangs genannten Art. Der Befestigungszapfen kann beispielsweise in eine Bohrung am Kupplungsarm, einem den Kupplungsarm tragenden Lager oder Querträger befestigt werden. Der vom Befestigungszapfen abstehende Haltearm stellt die Befestigungsband-Halteaufnahme für eine Befestigungsband, beispielsweise also den Kabelbinder, bereit. Allerdings gibt es nur beschränkte Möglichkeiten, einen Kabelbinder mit einer derartigen Befestigungsvorrichtung zu verbinden.

Es ist daher die Aufgabe der vorliegenden Erfindung, eine verbesserte Anhängekupplung bereitzustellen.

Zur Lösung der Aufgabe ist bei einer Anhängekupplung der eingangs genannten Art vorgesehen, dass an dem Haltearm mindestens zwei Befestigungsband-Halteaufnahmen angeordnet sind.

Es ist dabei ein Grundgedanke, dass der Haltearm mehrere Befestigungsband-Halteaufnahmen bereitstellt, beispielsweise zwei Befestigungsband-Halteaufnahmen oder weitere Befestigungsband-Halteaufnahmen. Somit ist es möglich, eines oder mehrere Befestigungsbänder, beispielsweise einen oder mehrere Kabelbinder, am Haltearm zu befestigen. Für das Befestigungsband stehen mehrere Befestigungsband-Halteaufnahmen zur Verfügung, die beispielsweise unterschiedlich ausgerichtet sind und/oder an unterschiedlichen Orten des Haltearms angeordnet sind. Dadurch erhöht sich die Flexibilität der Befestigungsvorrichtung erheblich.

Die Anhängekupplung weist beispielsweise einen Kupplungsarm auf, an dessen freiem Endbereich ein Kupplungselement, zum Beispiel eine Kupplungskugel, zum Anhängen eines Anhängers oder Befestigen eines Lastenträgers angeordnet ist.

Die Anhängekupplung weist ein Befestigungsobjekt auf oder stellt das Befestigungsobjekt bereit, beispielsweise den Kupplungsarm oder eine Trägeranordnung, wobei das Befestigungsobjekt eine oder mehrere Befestigungsaufnahmen für die Befestigungsvorrichtung aufweist. An der Trägeranordnung ist der Kupplungsarm angeordnet. Die Trägeranordnung ist am Kraftfahrzeug befestigt oder befestigbar.

Ohne weiteres kann das Befestigungsobjekt auch durch ein Steuergerät der Anhängekupplung, beispielsweise zur Ansteuerung einer Anhängersteckdose und/oder zur Ansteuerung eines Antriebsmotors der Anhängekupplung sein oder umfassen. Zum Beispiel können zwischen dem Steuergerät und der Anhängersteckdose und/oder Leitungen zwischen dem Steuergerät und dem Bordnetz des Kraftfahrzeugs und/oder Leitungen zwischen dem Steuergerät und dem Antriebsmotor anhand der Befestigungsvorrichtung befestigt oder befestigbar sein.

Der Haltearm steht vorzugsweise winkelig vom Befestigungszapfen ab, beispielsweise rechtwinkelig. Vorzugsweise ist vorgesehen, dass die Haltearm-Längsachse und die Befestigungszapfen-Längsachse zueinander winkelig, beispielsweise rechtwinkelig sind.

Der Befestigungszapfen ist vorzugsweise am einen Längsende des Haltearms angeordnet. Das andere Längsende des Haltearms ist ein freies Längsende. Der Haltearm steht also mit seinem freien Längsende vom Befestigungszapfen ab. Grundsätzlich möglich wäre es aber auch, dass der Befestigungszapfen zwischen den Längsenden des Haltearms angeordnet ist, beispielsweise längsmittig oder auch näher beim einen oder beim anderen Längsende.

Weiterhin ist es vorteilhaft, wenn an einander entgegengesetzten Längsenden des Haltearms einerseits der Befestigungszapfen und andererseits eine Stützfläche zum Abstützen an dem Befestigungsobjekt angeordnet sind. Eine derartige Stützfläche ist beispielsweise an einem Stützvorsprung vorgesehen.

Ein bevorzugtes Konzept sieht vor, dass von dem Haltearm in einem Längsabstand bezüglich der Haltearm-Längsachse zur selben Seite des Haltearms oder zu verschiedenen Seiten, zum Beispiel zueinander winkeligen Seiten des Haltearms, der Befestigungszapfen und eine Stützkontur oder ein Stützvorsprung vorstehen, die bzw. der eine Stützfläche zur Abstützung des Haltearms an dem Befestigungsobjekt neben der Befestigungsaufnahme aufweist. Somit kann sich die Vorrichtung einerseits anhand des Befestigungszapfens am Befestigungsobjekt abstützen, andererseits zusätzlich noch durch den Stützvorsprung oder die Stützkontur. Selbstverständlich können mehrere vor den Haltearm vorstehende Stützkonturen oder Stützvorsprünge vorgesehen sein, wobei diese Stützkonturen oder Stützvorsprünge bezüglich der Haltearm-Längsachse denselben Längsabstand oder auch unterschiedliche Längsabstände zum Befestigungszapfen haben können. Beispielsweise ist es möglich, dass die Stützkontur oder der Stützvorsprung einerseits und andererseits der Befestigungszapfen zu einander entgegengesetzten Seiten des Haltearms vorstehen, beispielsweise wenn die Befestigungsvorrichtung in einem Zwischenraum des Befestigungsobjekts anzuordnen ist und sich somit an einander gegenüberliegenden Flächen des Befestigungsobjekts abstützen soll. Besonders bevorzugt ist jedoch eine Ausführungsform, bei der der Befestigungszapfen und die Stützkontur oder der Stützvorsprungs zur selben Seite des Haltearms vorstehen, sodass sich der Haltearm mit der Stützkontur oder dem Stützvorsprungs in einem Längsabstand zu dem Befestigungszapfen an einer Wandfläche des Befestigungsobjekt abstützen kann, an der die Befestigungsaufnahme angeordnet ist.

Vorteilhaft ist es, wenn der Stützvorsprung und der Befestigungszapfen in Bezug auf die Haltearm-Längsachse an einander entgegengesetzten Längsenden oder Längsendbereichen des Haltearms angeordnet sind. Somit ist der Haltearm an beiden Längsenden oder Längsendbereichen am Befestigungsobjekt abstützbar.

Der Stützvorsprung steht beispielsweise hakenartig vor den Befestigungsarm vor.

Bevorzugt ist es, wenn der Haltearm länger als der Stützvorsprung ist.

Der Stützvorsprung und der Befestigungsarm bilden eine beispielsweise L-förmige Konfiguration oder haben eine L-förmige Gestalt.

Bevorzugt steht der Stützvorsprung rechtwinkelig zu der Haltearm-Längsachse von dem Haltearm ab. Der Stützvorsprung verläuft vorzugsweise rechtwinkelig zu der Haltearm-Längsachse und/oder parallel zu der Befestigungszapfen-Längsachse. Insbesondere vorteilhaft ist es, wenn eine Stützfläche des Stützvorsprungs, die zur Abstützung an dem Befestigungsobjekt vorgesehen ist, in einer zu der Haltearm-Längsachse parallelen Ebene verläuft.

Ein vorteilhaftes Konzept sieht vor, dass zwischen dem Haltearm und dem Befestigungszapfen vor den Befestigungszapfen eine quer zur Befestigungszapfen-Längsachse verlaufende, insbesondere rechtwinkelig quer zur Befestigungszapfen-Längsachse orientierte, Anschlagfläche zum Abstützen an dem Befestigungsobjekt neben der Befestigungsaufnahme, insbesondere an einem Randbereich neben der Befestigungsaufnahme, vorsteht. Die Anschlagfläche ist beispielsweise an einem oder mehreren radial vor den Befestigungszapfen vorstehenden Stützvorsprüngen, einem Stützflansch, einem tellerartigen Vorsprung oder dergleichen vorgesehen. Der Befestigungszapfen steht bezüglich seiner Befestigungszapfen-Längsachse vor die Anschlagfläche vor. Die Anschlagfläche bildet vorzugsweise einen Steck-Anschlag beim Einstecken des Befestigungszapfens in die Befestigungsaufnahme.

Die Anschlagfläche an dem Befestigungszapfen und die Stützfläche des Stützvorsprungs des Haltearms sind vorteilhaft in derselben, insbesondere zu der Haltearm-Längsachse parallelen, Ebene angeordnet. Der Haltearm kann sich dann im am Befestigungsobjekt montierten Zustand in der Art einer Brücke zwischen der Anschlagfläche und der Stützfläche erstrecken. Zwischen der Anschlagfläche und der Stützfläche erstreckt sich vorteilhaft im am Befestigungsobjekt montierten Zustand der Befestigungsvorrichtung ein sozusagen brückenartiger Abschnitt des Haltearms.

Das Befestigungsband ist durch die Befestigungsband-Halteaufnahmen durchsteckbar, so dass die Befestigungsband-Halteaufnahmen als Durchsteck-Halteaufnahme(n) ausgestaltet sind.

Das Befestigungsband ist durch die mindestens eine Befestigungsband-Halteaufnahme entlang einer Durchsteckachse durchsteckbar. Beispielsweise kann das Befestigungsband in der Art einer Schlaufe durch die Befestigungsband-Halteaufnahme hindurchgeführt oder durchführbar sein.

Unter dem Begriff "Flachseite" ist in der nachfolgenden Beschreibung eine Seite einer Komponente zu verstehen, die flach oder im wesentlichen flach ist und die eine größere Flächenausdehnung als eine andere Seite oder die anderen Seiten der jeweiligen Komponente aufweist.

Der Steckquerschnitt mindestens einer Befestigungsband-Halteaufnahme weist vorzugsweise eine Flachgestalt und/oder einen rechteckigen Steckquerschnitt auf. Vorzugsweise sind mehrere Befestigungsband-Halteaufnahmen mit einer Flachgestalt nebeneinander an dem Haltearm angeordnet. Flachseiten der mindestens einen Befestigungsband-Halteaufnahme, zwischen denen sich Schmalseiten der Befestigungsband -Halteaufnahme erstrecken, sind vorzugsweise parallel zu einer Flachseite des Haltearms.

Bei den beiden nachfolgend erläuterten Maßnahmen bildet das Befestigungsband vorteilhaft einen Bestandteil eines Systems, welches die Befestigungsvorrichtung und das Befestigungsband umfasst. Insbesondere ist das Befestigungsband in diesem Fall ein sogenannter Kabelbinder.

Besonders bevorzugt ist es, wenn mindestens eine Befestigungsband-Halteaufnahme eine Innenumfangskontur zum verdrehsicheren Aufnehmen des Befestigungsbandes aufweist. Beispielsweise ist ein flach-rechteckiger Steckquerschnitt als Innenumfangskontur der Durchsteck-Befestigungsaufnahme vorgesehen, in der ein Befestigungsband mit flach-rechteckiger Außenumfangskontur verdrehsicher aufnehmbar ist.

Weiterhin vorteilhaft ist es, wenn mindestens eine Befestigungsband-Halteaufnahme zum ortsfesten Halten des Befestigungsbands quer zur Durchsteckachse ausgestaltet ist. Zwar hat das Befestigungsband in der Halteaufnahme entlang der Durchsteckachse einen linearen Bewegungsfreiheitsgrad und quer zur Durchsteckachse ein gewisses Spiel, welches zum Durchstecken des Befestigungsbandes durch die Halteaufnahme ausreichend ist, jedoch keine solche Bewegungsfreiheit, dass das Befestigungsband quer zur Durchsteckachse in der Halteaufnahme verschieblich ist, beispielsweise in der Art einer Scherbewegung, oder um eine Schwenkachse schwenkbar ist, die zu einer Ebene, in der die Durchsteckachse verläuft, winkelig, beispielsweise rechtwinkelig ist. Mithin ist also das Befestigungsband in der Halteaufnahme vorteilhaft schwenkfest bezüglich einer Schwenkachse geführt, die quer, insbesondere rechtwinkelig quer, zu einer die Durchsteckachse aufweisenden Ebene verläuft.

Allerdings können auch Befestigungsband-Halteaufnahmen vorgesehen sein, die auch ein Bewegungsspiel oder eine Beweglichkeit des Befestigungsbandes quer zur Durchsteckachse ermöglichen. Es kann zum Beispiel vorgesehen sein, dass eine oder mehrere Befestigungsband-Halteaufnahmen einerseits den linearen Bewegungsfreiheitsgrad zum Durchstecken des Befestigungsbandes durch die Halteaufnahme bereitstellen, andererseits noch zusätzlich mindestens einen weiteren Bewegungsfreiheitsgrad, beispielsweise einen linearen Bewegungsfreiheitsgrad oder einen Schwenk-Bewegungsfreiheitsgrad, der von dem linearen Bewegungsfreiheitsgrad bezüglich der Durchsteckachse verschieden ist. Vorteilhaft ist es, wenn auch eine derartige Befestigungsband-Halteaufnahme einen Steckquerschnitt zum verdrehsicheren Halten des Befestigungsbandes aufweist.

Weiterhin ist es vorteilhaft, wenn eine Befestigungsband-Halteaufnahme, die zum ortsfesten Halten des Befestigungsbandes quer zur Durchsteckachse ausgestaltet ist, und eine weitere Befestigungsband-Halteaufnahme, die mindestens einen Bewegungsfreiheitsgrad für das Befestigungsband bereitstellt, der von dem linearen Bewegungsfreiheitsgrad bezüglich der Durchsteckachse verschieden ist, in einer Reihenrichtung unmittelbar nebeneinander angeordnet sind und/oder jeweils einander gegenüberliegende Führungswände aufweisen, die denselben oder im Wesentlichen denselben Abstand zueinander aufweisen. Somit kann ein Befestigungsband mit einander entgegengesetzten Längsseiten, die zur Anlage oder zur Führung an den Führungswänden der beiden Halteaufnahmen vorgesehen sind, in jede der Halteaufnahmen eingesteckt werden und ist durch die jeweiligen Führungswände geführt.

Bevorzugt ist es, wenn mehrere, beispielsweise zwei oder weitere Halteaufnahmen, dieselben Steckquerschnitte zum Durchstecken von Befestigungsbändern aufweisen.

Weiterhin vorteilhaft ist es, wenn die Befestigungsband-Halteaufnahme einen in ihren zum Durchstecken des Befestigungsbandes vorgesehenen Steckquerschnitt vorstehenden Führungsvorsprung aufweist. Der Führungsvorsprung ist insbesondere zum Eingreifen in einen Zwischenraum zwischen Längsseiten des Befestigungsbandes vorgesehen. Der Führungsvorsprung hat vorzugsweise eine ballige Gestalt. Der Führungsvorsprung steht zum Beispiel in Richtung einer gegenüberliegenden Wand des Steckquerschnitts oder der Befestigungsband-Halteaufnahme vor und wirkt im Sinne eines Andrückens des Befestigungsbandes an diese Wand. Bevorzugt ist der Führungsvorsprung mittig zwischen Querseiten der Befestigungsband-Halteaufnahme angeordnet. Bevorzugt hat der Führungsvorsprung eine ballige oder gerundete Führungskontur zum Führen des Befestigungsbandes.

Vorteilhaft ist vorgesehen, dass die Befestigungsvorrichtung mindestens zwei Befestigungsband-Halteaufnahmen aufweist, deren Durchsteckachsen zueinander winkelig, insbesondere rechtwinkelig sind und/oder sich kreuzen, insbesondere rechtwinkelig kreuzen. Beispielsweise können die sich kreuzenden Durchsteckachsen in derselben Ebene liegen. Es sei aber erwähnt, dass die Befestigungsvorrichtung auch zwei oder mehre Befestigungsband-Halteaufnahmen aufweisen kann, deren Durchsteckachse zueinander parallel sind, insbesondere in derselben Ebene oder in zueinander winkeligen, insbesondere rechtwinkeligen Ebenen angeordnet sind.

Vorteilhaft ist weiterhin, wenn mindestens zwei Befestigungsband-Halteaufnahmen Steckkanäle aufweisen, die miteinander kommunizieren und/oder sich kreuzen, insbesondere sich rechtwinkelig kreuzen. Wenn einer der Steckkanäle durch eine Befestigungsband sozusagen belegt ist, ist der andere Steckkanal zum Durchstecken eines Befestigungsbandes dadurch blockiert. Bevorzugt ist es, wenn in einem Kreuzungsbereich der beiden Steckkanäle ein Führungsvorsprung der obigen Art angeordnet ist, der zum Führen des Befestigungsbandes unabhängig davon geeignet ist, in welchen Steckkanal es eingesteckt ist. Es ist aber auch möglich, dass sich die Steckkanäle nur tangieren, d. h. dass sie zueinander offen sind und insoweit miteinander kommunizieren, dass aber zugleich in beide Steckkanäle jeweils ein Befestigungsband zugleich einsteckbar ist.

Der Steckkanal mindestens einer Befestigungsband-Halteaufnahme hat vorzugsweise eine Flachgestalt mit einander gegenüberliegenden Führungswänden, insbesondere planen Führungswänden, die einer Mittelebene des jeweiligen Stecckanals gegenüberliegen. Eine Quererstreckung der Führungswände quer zur Durchsteckachse ist größer als eine Quererstreckung von Seitenwänden, die zu diesen Führungswänden winkelig, beispielsweise rechtwinkelig sind. Beispielsweise bilden die Führungswände die langen Seiten eines rechtwinkeligen Steckquerschnittes, die Seitenwände die schmalen Seiten. An dieser Stelle sei aber erwähnt, dass weder die Führungswände noch die Seitenwände unbedingt Planflächen oder Planwände sein müssen.

Wenn mehrere derartiger Befestigungsband-Halteaufnahmen vorgesehen sind, ist es vorteilhaft, wenn die Mittelebenen mindestens zweier Steckkanäle, vorzugsweise dreier Steckkanäle, jeweils zueinander winkelig, beispielsweise rechtwinkelig sind. Dabei ist es möglich, dass beispielsweise die Durchsteckachsen zweier Befestigungsband-Halteaufnahmen zueinander parallel verlaufen, jedoch die Mittelebenen dieser Befestigungsband-Halteaufnahmen zueinander winkelig, beispielsweise rechtwinkelig sind. Es ist aber auch möglich, dass zwei Befestigungsband-Halteaufnahmen zueinander winkelige, beispielsweise orthogonale, Durchsteckachsen und zueinander winkelige, beispielsweise orthogonale Mittelebenen aufweisen.

Ferner ist es vorteilhaft, wenn die Durchsteckachsen zweier Befestigungsband-Halteaufnahmen in derselben Ebene, insbesondere derselben Mittelebene mindestens zweier Steckkanäle, verlaufen.

Weiter ist es vorteilhaft, wenn mindestens zwei Steckkanäle und/oder der Durchsteckachsen in derselben Ebene liegen.

Bei der Anordnung der Befestigungsband-Halteaufnahmen sind vielfältige Möglichkeiten gegeben:
Bevorzugt ist es, wenn eine oder mehrere Befestigungsband-Halteaufnahmen zwischen Längsenden des Haltearms angeordnet ist oder sind. Beispielsweise können zwei oder drei Befestigungsband-Halteaufnahmen zwischen den Längsenden des Haltearms vorgesehen sein. Die Befestigungsband-Halteaufnahmen haben beispielsweise voneinander verschiedene oder gleiche Steckquerschnitte zum Durchstecken eines jeweiligen Befestigungsbandes.

Vorteilhaft kann dabei beispielsweise auch vorgesehen sein, dass mindestens eine Halteaufnahme zwischen den Längsenden des Haltearms zum ortsfesten Führen oder Halten des Befestigungsbandes in Bezug auf Bewegungsfreiheitsgraden, die von dem linearen Bewegungsfreiheitsgrad bezüglich der Durchsteckachse verschieden sind, und mindestens eine, vorzugsweise mehrere Befestigungsband-Halteaufnahmen am Haltearm vorgesehen ist oder sind, die mindestens einen weiteren Bewegungsfreiheitsgrad für das Befestigungsband bereitstellen, der vom linearen Bewegungsfreiheitsgrad bezüglich der Durchsteckachse verschieden ist. Somit kann also das Befestigungsband wahlweise in einer Längsorientierung ausschließlich bezüglich der Durchsteckachse in der erstgenannten Befestigungsaufnahme angeordnet werden oder auch in einer dazu winkeligen Lage, beispielsweise zur Anpassung an die örtlichen Gegebenheiten des Befestigungsobjektes.

Ein vorteilhaftes Konzept sieht weiterhin vor, dass mindestens eine Befestigungsband-Halteaufnahme, vorzugsweise zwei oder weitere Befestigungsband-Halteaufnahmen, an dem oder einem von dem Befestigungszapfen entfernten Längsende des Haltearms angeordnet sind. Beispielsweise sind diese Befestigungsband-Halteaufnahmen an dem vorgenannten Stützvorsprung des Haltearms vorgesehen. Vorzugsweise haben die Befestigungsband-Halteaufnahmen an dem Stützvorsprung zueinander winkelige und/oder sich kreuzende Durchsteckachsen.

Weiterhin hat der Haltearm vorzugsweise an seiner von dem Befestigungszapfen abgewandten Seite eine sich entlang seiner Haltearm-Längsachse erstreckende Auflagefläche, insbesondere eine Planfläche. Die Auflagefläche dient beispielsweise zum Auflegen einer Leitung, insbesondere einer elektrischen Leitung, die anhand des Befestigungsbandes oder eines Befestigungsbandes an der Befestigungsvorrichtung gehalten ist. Die Auflagefläche erstreckt sich vorzugsweise über die gesamte Längslänge des Haltearms bezüglich seiner Längsachse. An der Auflagefläche kann auch eine Aufnahmemulde angeordnet sein.

Vorteilhaft ist es, wenn der Haltearm eine Tragwand und eine dieser gegenüberliegende Bodenwand aufweist. Die Tragwand und die Bodenwand sind vorzugsweise ebene Wände. Ferner sind die Tragwand und die Bodenwand vorzugsweise umfangsseitig konturgleich, insbesondere im Wesentlichen konturgleich. Bevorzugt ist es, wenn sich die Tragwand und die Bodenwand bis zu dem Befestigungszapfen erstrecken. Im Bereich des Befestigungszapfens hat die Tragwand vorzugsweise eine Anpresskontur oder bildet eine Betätigungsfläche aus, die zur Betätigung des Befestigungszapfens in eine diesen aufnehmende Aufnahme hinein geeignet ist. Insbesondere im Bereich des Befestigungszapfens kann die Tragwand über die Bodenwand vorstehen, z.B. zur Bereitstellung der vorgenannten Betätigungsfläche.

Die Tragwand und die Bodenwand des Haltearms sind vorzugsweise durch mindestens eine Seitenwand und/oder mindestens einen Verbindungssteg miteinander verbunden. Zwischen der Tragwand und der Bodenwand sind eine oder mehrere Befestigungsband-Halteaufnahmen ausgebildet, die seitlich durch einen Verbindungssteg und/oder eine Seitenwand begrenzt sind. Eine jeweilige Seitenwand oder ein jeweiliger Verbindungssteg bildet dabei vorzugsweise eine Schmalseite einer Befestigungsband-Halteaufnahme. Bevorzugt sind mehrere zwischen der Tragwand und der Bodenwand des Haltearms nebeneinander angeordnete Befestigungsband-Halteaufnahmen vorgesehen.

Bevorzugt ist es, wenn die Befestigungsband-Halteaufnahmen oder jedenfalls eine Befestigungsband-Halteaufnahme zu der Tragwand und der Bodenwand parallel verlaufende Flachseiten aufweist. Schmalseiten der mindestens einen Befestigungsband-Halteaufnahme verlaufen vorzugsweise quer, beispielsweise rechtwinkelig quer, zu der Tragwand und der Bodenwand. Die Flachseiten sind beispielsweise durch eine Seitenwand oder einen Verbindungssteg zwischen der Bodenwand und der Tragwand gebildet oder begrenzt.

Der Haltearm weist vorzugsweise eine Flachseite auf. Die Flachseite ist beispielsweise an einer Bodenwand oder einer Tragwand des Haltearms angeordnet oder dadurch gebildet.

Weiterhin vorteilhaft ist es, wenn die Befestigungsvorrichtung mindestens eine Befestigungsband-Halteaufnahme aufweist, deren Durchsteckachse quer, beispielsweise rechtwinkelig quer, zu der oder einer Flachseite des Haltearms und/oder quer zur Befestigungszapfen-Längsachse verläuft. Die Durchsteckachse kann auch parallel zu einer Normalenrichtung der Flachseite verlaufen.

Vorteilhaft weist die Befestigungsvorrichtung mindestens eine Befestigungsband-Halteaufnahme auf, deren Durchsteckachse parallel zu der Flachseite des Haltearms und/oder rechtwinkelig quer zu einer Normalenrichtung der Flachseite des Haltearms verläuft. Insbesondere weist die Befestigungsband-Halteaufnahme einen Steckquerschnitt mit einer Flachgestalt auf, wobei die Flachseiten der Befestigungsbolzen-Halteaufnahme und die Flachseite des Haltearms zueinander parallel sind.

Vorteilhaft weist die Befestigungsvorrichtung mindestens eine Befestigungsband-Halteaufnahme auf, deren Durchsteckachse sich parallel oder etwa parallel, beispielsweise in einem kleinen Winkel von maximal 5°, zu der Befestigungszapfen-Längsachse erstreckt. Beispielsweise verläuft diese Befestigungsband-Halteaufnahme an dem Stützvorsprung oder durch den Stützvorsprung.

Der Befestigungszapfen hat vorzugsweise eine tannenbaumartige oder rippenartige Außenumfangskontur, sodass er sich mit der Befestigungsaufnahme sozusagen verzahnt. Insbesondere sind Rippen oder Haltevorsprünge des Befestigungszapfens in einer Richtung zu dem Haltearm hin geneigt, sodass sie beim Einstecken in die Befestigungsaufnahme im Sinne einer Verkleinerung des Steckquerschnittes des Befestigungszapfens durch den Innenumfang der Befestigungsaufnahme verdrängbar sind. Eine von der Befestigungszapfen-Längsachse durchsetzte Außenumfangskontur des Befestigungszapfens ist vorzugsweise rund, insbesondere kreisrund.

Bevorzugt ist es, wenn der Kupplungsarm an einem Lager angeordnet ist, anhand dessen der Kupplungsarm zwischen einer zum Ankuppeln des Anhängers oder des Lastenträgers an das Kupplungselement geeigneten Gebrauchsstellung und einer Nichtgebrauchstellung verstellbar ist, beispielsweise verschwenkbar ist. Das Lager weist beispielsweise ein Lagerteil auf, welches beweglich, beispielsweise schwenkbeweglich, an einem Lagerkörper gelagert ist, der an dem vorgenannten Träger oder der Trägeranordnung angeordnet ist, welche ihrerseits wiederum am Kraftfahrzeug befestigt oder befestigbar ist. Auch das Lager, beispielsweise das Lagerteil und/oder der Lagerkörper, können mindestens eine Befestigungsaufnahme für eine erfindungsgemäße Befestigungsvorrichtung aufweisen. In der Gebrauchsstellung steht das Kupplungselement oder der Kupplungsarm im am Kraftfahrzeug montierten Zustand der Anhängekupplung nach hinten vor das Kraftfahrzeug vor. In der Nichtgebrauchstellung steht das Kupplungselement oder der Kupplungsarm weniger weit als in der Gebrauchsstellung vor das Kraftfahrzeug vor. Beispielsweise ist der Kupplungsarm und/oder das Kupplungselement in der Nichtgebrauchstellung vorteilhaft hinter oder unter einem Stoßfänger des Kraftfahrzeugs angeordnet.

Bevorzugt ist es, wenn die Anhängekupplung eine Anschlussvorrichtung, insbesondere eine Anhängersteckdose, zur Verbindung eines Bordnetzes des Anhängers oder Lastenträgers mit einem Bordnetz des Kraftfahrzeugs aufweist. Eine oder mehrere Anschlussleitungen oder Verbindungsleitungen der Anschlussvorrichtung ist vorzugsweise anhand einer oder mehrerer Befestigungsvorrichtungen der obigen Art am Befestigungsobjekt, insbesondere dem Kupplungsarm und/oder dem Lager, zum Beispiel dem beweglichen Lagerteil, und/oder der Trägervorrichtung, befestigt.

Das Kupplungselement umfasst beispielsweise einen Kupplungsarm. Am Kupplungselement ist zweckmäßigerweise ein Kuppelstück, insbesondere eine Kupplungskugel, zum Ankuppeln des Anhängers und/oder Lastenträgers vorgesehen. Beispielweise kann eine sogenannte Zugkugelkupplung an eine Kupplungskugel zur Bildung eines Drehgelenks angekuppelt werden. Ein Lastenträger ist in der Regel an das Kuppelstück angeklemmt. Es sind aber auch Steckverbindungen zwischen dem Kupplungselement und beispielsweise dem Lastenträger möglich, wobei beispielsweise am Kupplungselement eine Steckaufnahme oder ein Steckvorsprung zum Anstecken des Lastenträgers vorgesehen ist.

Nachfolgend werden Ausführungsbeispiele der Erfindung anhand der Zeichnung erläutert. Es zeigen:

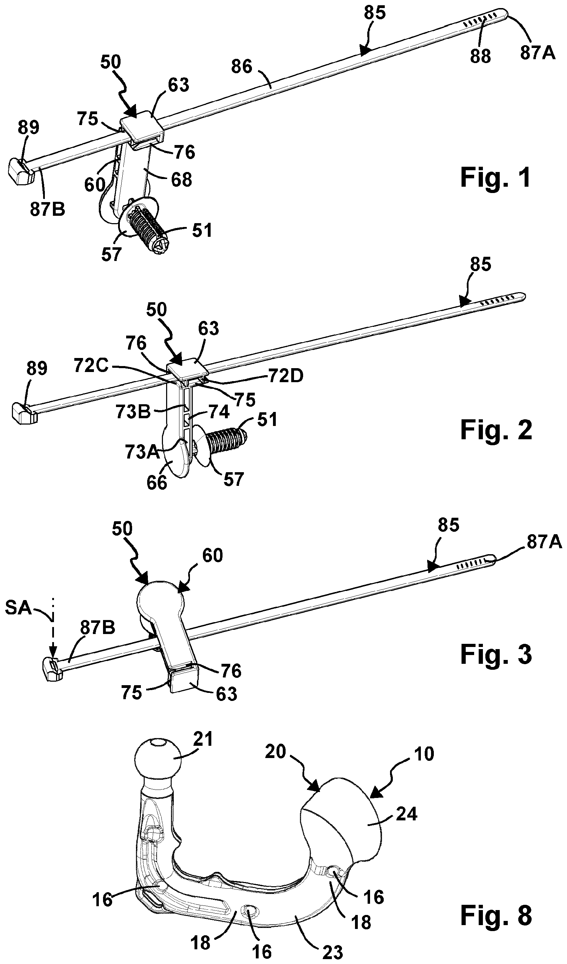

- Figur 1: eine perspektivische Schrägansicht einer Befestigungsvorrichtung mit einem Befestigungsband, welches in eine an einem Stützvorsprung angeordnete Befestigungsband-Halteaufnahme der Befestigungsvorrichtung in einer ersten Orientierung eingesteckt ist,
- Figur 2: die Befestigungsvorrichtung gemäß Figur 1, wobei das Befestigungsband in eine weitere Befestigungsband-Halteaufnahme des Stützvorsprungs in einer anderen Orientierung eingesteckt ist,
- Figur 3: die Befestigungsvorrichtung der vorstehenden Figuren, wobei jedoch das Befestigungsband in eine Befestigungsband-Halteaufnahmen am Haltearm der Befestigungsvorrichtung eingesteckt ist,

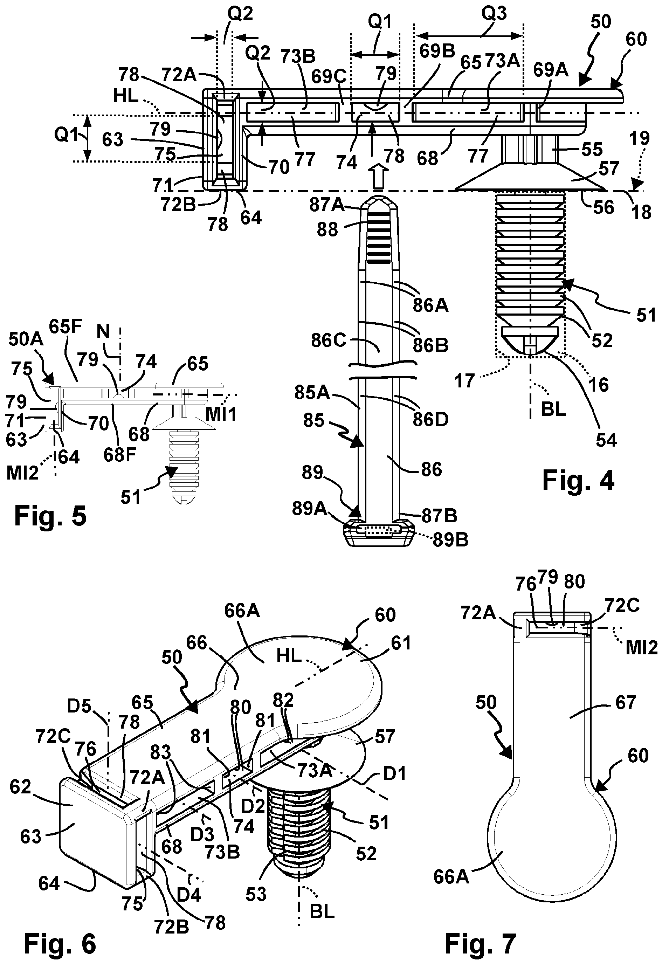

- Figur 4: eine Seitenansicht der Befestigungsvorrichtung mit einem Befestigungsband in Draufsicht,
- Figur 5: eine Variante der Befestigungsvorrichtung gemäß Figur 5,
- Figur 6: eine perspektivische Schrägansicht der Befestigungsvorrichtung, die in
- Figur 7: von oben dargestellt ist,
- Figur 8: eine perspektivische Schrägansicht eines Kupplungsarms mit Befestigungsaufnahmen für die Befestigungsvorrichtung gemäß vorstehender Figuren,
- Figur 9: eine Frontalansicht von hinten auf ein Kraftfahrzeug mit einer Anhängekupplung sowie schematisch dargestellten Befestigungsvorrichtungen gemäß der Erfindung, wobei ein Kupplungsarm der Anhängekupplung in einer zum Ankuppeln eines Anhängers geeigneten Gebrauchsstellung steht,
- Figur 10: eine weitere Ansicht von hinten auf das Kraftfahrzeug ähnlich wie Figur 9, wobei Kupplungsarm in Nichtgebrauchstellung verstellt ist.

Eine Anhängekupplung 10 umfasst eine Trägeranordnung 11 mit einem Querträger 12, der beispielsweise quer am Heck eines Kraftfahrzeugs 90 verläuft. Die Trägeranordnung 12 ist mit der Karosserie 91 des Kraftfahrzeugs 90 verbunden oder verbindbar.

Der Querträger 12 ist beispielsweise anhand von nicht dargestellten Seitenträgern an einer Karosserie 91 des Kraftfahrzeugs 90 festgelegt. Die Seitenträger sind beispielsweise mit der Karosserie 91 verschraubt. Die Seitenträger können sich seitlich in Fahrtrichtung längs des Kraftfahrzeugs 90 an der Karosserie 91 außenseitig erstrecken oder auch heckseitig angeordnet sein.

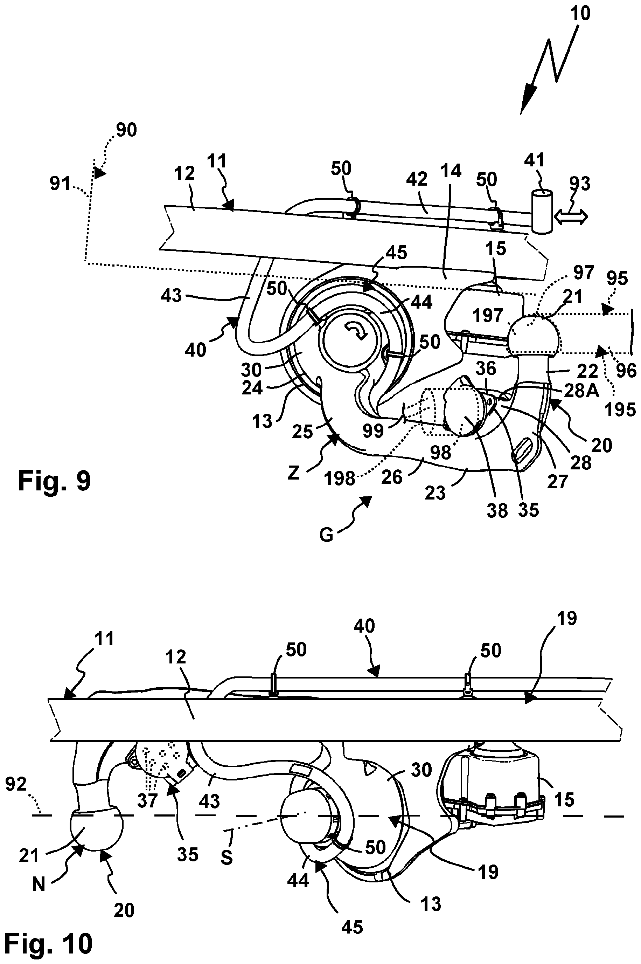

Die Trägeranordnung 12 ist zwischen der Karosserie 91 und einem Stoßfänger 92 des Kraftfahrzeugs 90 angeordnet. In der in Figur 9 dargestellten Gebrauchsstellung G steht ein Kupplungselement 20 nach hinten vor das Heck oder den Stoßfänger 92 des Kraftfahrzeugs 90 vor, so dass ein Anhänger 95 oder Lastenträger 195 an das Kupplungselement 20 ankuppelbar ist.

Der Anhänger 95 oder Lastenträger umfasst beispielsweise eine Deichsel 96, an deren freiem Endbereich eine Zugkugelkupplung 97 angeordnet ist. Die Zugkugelkupplung 97 ist drehbar an einem Kuppelstück 21 des Kupplungselementes 20 gelagert, beispielsweise an einer Kupplungskugel. Im Falle des Lastenträgers 195 ist eine Lastenträgerkupplung 197 drehfest am Kuppelstück 21 angeordnet, insbesondere mit diesem verklemmt.

Das Kupplungsstück 21 ist an einem freien Endbereich 22 eines Kupplungsarmes 23 angeordnet. Ein Schwenklagerabschnitt 24 des Kupplungsarmes 23 ist an einem Lager 13, insbesondere einem Schwenklager, um eine Schwenkachse S schwenkbar zwischen der Gebrauchsstellung G und einer Nichtgebrauchstellung N gelagert. In der Nichtgebrauchstellung N ist das Kupplungsstück 21 vorzugsweise hinter den Stoßfänger 92 und/oder den Querträger 12 verstellt, jedenfalls nicht zum Ankuppeln des Anhängers 95 geeignet. In der Regel ist das Kupplungselement 20 in der Nichtgebrauchstellung N nicht oder nur eingeschränkt sichtbar für einen Bediener, was ästhetisch ansprechend ist.

Eine Anschlussvorrichtung 35, beispielsweise eine sogenannte Anhängersteckdose, ist am Kupplungsarm 23 befestigt, so dass sie dessen Schwenkbewegung zwischen der Gebrauchsstellung G und der Nichtgebrauchstellung N mitmacht. In der Gebrauchsstellung G ist die Anschlussvorrichtung 35 bequem zugänglich, während sie in der Nichtgebrauchstellung N zusammen mit dem Kupplungselement 20 ganz oder im Wesentlichen hinter dem Stoßfänger 92 verborgen ist.

Das Kupplungselement 20 weist einen Krümmungsabschnitt 25, der sich vom Schwenklagerabschnitt 24 weg erstreckt, einen im Wesentlichen gerade verlaufenden Abschnitt 26 sowie einen weiteren Krümmungsabschnitt 27 zwischen dem Abschnitt 26 und dem freien Endbereich 22 auf. An dem Krümmungsabschnitt 27 ist innenseitig eine Halterung 28, beispielsweise Halteböcke umfassend, für die Anschlussvorrichtung 35 vorgesehen. Mithin ist also die Anschlussvorrichtung 35 sozusagen geschützt im Innenbogen des Krümmungsabschnittes 27 angeordnet.

Das Lager 13 ist an einem Halter 14 vorgesehen, der beispielsweise vom Querträger 12 absteht, insbesondere nach unten absteht. An dem Halter 14 ist in nicht dargestellter Weise eine Lagerachse schwenkbar gelagert oder steht eine Lagerachse zum Schwenklagerabschnitt 24 des Kupplungselementes 20 vor. Mithin ist also der Schwenklagerabschnitt 24 am Halter 14 um die Schwenkachse S schwenkbar gelagert. Der Schwenklagerabschnitt 24 weist beispielsweise einen Lagerkopf 30 auf, in den eine Lagerwelle, die vom Halter 14 absteht, eingreift.

Eine Anschlussvorrichtung 98 des Anhängers 95 oder Lastenträgers 195, beispielsweise ein Anhängerstecker, kann mit der Anschlussvorrichtung 35, der bereits erläuterten Anhängersteckdose verbunden werden, so dass ein mit der Anschlussvorrichtung 98 verbundenes Bordnetz 99 des Anhängers 95 mit dem Bordnetz 93 des Kraftfahrzeugs 90 über die Anschlussvorrichtung 35 verbunden ist.

Mithin ist also die Anschlussvorrichtung 35 sozusagen geschützt im Innenbogen des Krümmungsabschnittes 27 angeordnet. Dadurch ist beispielsweise ihr Gehäuse 36, welches in der Halterung 28 z.B. anhand von Haltevorsprüngen 28A gehalten ist, geschützt. In dem Gehäuse 36 sind beispielsweise Steckkontakte 37 der Anschlussvorrichtung 35 vorhanden, die mit einzelnen in der Zeichnung nicht dargestellten Leitern der Leitung 40, beispielsweise Leitern zur Versorgung von Leuchten des Anhängers 96, verbunden sind. Die Steckkontakte 37 sind durch einen Deckel 38 in an sich bekannter Weise schützbar. Der Deckel 38 ist am Gehäuse 36 der Anschlussvorrichtung 35 beispielsweise schwenkbar gelagert. Bei geöffnetem Deckel 38 kann eine Anschlussvorrichtung 98, 198 des Anhängers 95 oder des Lastenträgers 195, beispielsweise ein Anhängerstecker, mit der Anschlussvorrichtung 35, der bereits erläuterten Anhängersteckdose verbunden werden, so dass ein mit der Anschlussvorrichtung 98 verbundenes Bordnetz 99 des Anhängers 95 mit dem Bordnetz 93 des Kraftfahrzeugs 90 über die Anschlussvorrichtung 35 verbunden ist.

Die Anschlussvorrichtung 35 ist anhand einer Leitung 40, die elektrische und/oder optische Verbindungsleiter umfasst, mit dem Bordnetz 93 verbunden. Die Leitung 40 ermöglicht eine elektrische und/oder optische Verbindung zwischen dem Bordnetz 93 des Kraftfahrzeugs 90 und einem Bordnetz 99 des Anhängers 95.

Die Leitung 40 führt beispielsweise zu einem Steuergerät oder Anschlussgerät 41 zum Ansteuern des Bordnetzes 99, so dass beispielsweise Heckleuchten des Anhängers 95, Blinker oder dergleichen, ansteuerbar sind.

Die Leitung 40 weist einen Leitungsabschnitt 42 auf, der mit dem Anschlussgerät oder Steuergerät 41 verbunden ist. Der Abschnitt 42 erstreckt sich beispielsweise entlang des Querträgers 12. Die Leitung 40 kann eine flexible Leitung sein oder auch eine nicht flexible oder starre Leitung umfassen. Beispielsweise kann die Leitung 40 im Bereich des Querträgers 12 in einem Aufnahmerohr oder Kabelkanal geführt sein.

Der Leitungsabschnitt 42 geht in einen Leitungsabschnitt 43 über, der flexibel ist, so dass er die Bewegungen des Kupplungselementes 20 zwischen der Nichtgebrauchstellung N und der Gebrauchsstellung G mitmacht. Der Leitungsabschnitt 43 erstreckt sich vom Querträger 12 zum Lagerkopf 30, wobei er an beiden Komponenten ortsfest festgelegt ist. Wenn der Lagerkopf 30 sich um die Schwenkachse S dreht, nämlich bei der Verstellung zwischen der Gebrauchsstellung G und der Nichtgebrauchstellung N, wird ein Leitungsabschnitt 44 der Leitung 40 auf einen Wickel 45 aufgewickelt oder von diesem Wickel 45 abgewickelt.

Zur Befestigung der Leitung 40 sind mehrere Befestigungsvorrichtungen 50 vorgesehen. Die Befestigungsvorrichtungen 50 umfassen Befestigungszapfen 51 zum Einstecken in Befestigungsaufnahmen 16, beispielsweise am Kupplungsarm 23, am Lagerkopf 30, an der Trägeranordnung 11, insbesondere dem Querträger 12, die somit Befestigungsobjekte 19 bilden. Die Befestigungsaufnahmen 16 sind beispielsweise als Bohrungen ausgestaltet. Beispielsweise haben die Befestigungsaufnahmen 16 eine im Wesentlichen zylindrische Innenumfangswand 17.

Der Befestigungszapfen 51 weist quer zu seiner Befestigungszapfen-Längsachse BL vorstehende Rippen 52 auf, beispielsweise ringförmige Rippen. Die Rippen 52 verzahnen sich sozusagen mit der Innenumfangswand 17 oder wirken einem Herausziehen des Befestigungszapfens 51 aus der Befestigungsaufnahme 16 entgegen.

Am radialen Außenumfang der Rippen 52 kann eine Aussparung oder Vertiefung 53, beispielsweise eine Art Verdrängungskavität vorgesehen sein. Die Aussparung 53 erstreckt sich entlang der Befestigungszapfen-Längsachse BL am radialen Außenumfang des Befestigungszapfens 51 bezüglich der Befestigungszapfen-Längsachse BL.

Die Rippen 52 sind bezüglich der Befestigungszapfen-Längsachse BL schräg geneigt, nämlich in einer Schrägneigung von einem freien Ende 54 des Befestigungszapfens 51 weg in Richtung zu dessen Verbindungsende 55, mit dem der Befestigungszapfen 51 mit einem Haltearm 60 der Befestigungsvorrichtung 50 verbunden ist.

Zwischen den Rippen 52 und dem Verbindungsende 55 ist ein Stützflansch 57, insbesondere ein tellerartiger Flanschvorsprung, vorgesehen, der an seiner den Rippen 52 zugewandten Seite eine Anschlagfläche 56 zum Anschlagen oder Abstützen an dem Befestigungsobjekt 19 aufweist. Beispielsweise stützt sich die Anschlagfläche 56 an einer Fläche 18 des Befestigungsobjekts 19 ab oder schlägt die Anschlagfläche 56 an der Fläche 18 an, an der die Befestigungsaufnahme 16 angeordnet ist.

Der Haltearm 60 weist eine Haltearm-Längsachse HL auf, die quer zur Befestigungszapfen-Längsachse BL verläuft, vorliegend rechtwinkelig quer. Mithin steht also der Haltearm 60 rechtwinkelig vom Befestigungszapfen 51 ab oder der Befestigungszapfen 51 steht rechtwinkelig vom Haltearm 60 ab. Der Befestigungszapfen 60 ist an einem Längsende 61 des Haltearms 60 angeordnet, der an seinem anderen, entgegengesetzten Längsende 62 einen Stützvorsprung 63 aufweist. An dem Stützvorsprung 63 ist eine Stützfläche 64 vorgesehen, die in derselben Ebene ist wie die Anschlagfläche 56. Mithin kann sich also der Haltearm 60, wenn der Befestigungszapfen 51 in die Befestigungsaufnahme 16 eingesteckt ist, sowohl mit der Anschlagfläche 56 als auch mit der Stützfläche 64 am Befestigungsobjekt 19 abstützen, nämlich an dessen Wand oder Fläche 18.

An einer von dem Befestigungszapfen 51 abgewandten Seite hat der Haltearm 60 eine Tragwand 65 mit einer Auflagefläche 66 zum Auflegen beispielsweise der Leitung 40. Die Auflagefläche 66 erstreckt sich über die gesamte Länge des Haltearms 60, d. h. vom einen Längsende 61 zum anderen Längsende 62 und ist vorzugsweise als eine Planfläche ausgestaltet.

Zwischen den Längsenden 61, 62 erstreckt sich ein Mittelabschnitt 67 des Haltearms 60. Im Bereich des Mittelabschnitts 66 und des Längsendes 62, also am Stützvorsprung 63, ist die Tragwand 65 schmaler als im Bereich des Längsendes 61. In einem von der Befestigungszapfen-Längsachse BL durchsetzten Bereich, also am Längsende 61 hat die Tragwand 65 eine größere Breite quer zur Haltearm-Längsachse HL und bildet eine Betätigungsfläche 66A aus. Die Betätigungsfläche 66A kann als Druckfläche oder Betätigungsfläche zum Eindrücken des Befestigungszapfens 51 in die Befestigungsaufnahme 16 dienen.

Die Betätigungsfläche 66A hat beispielsweise in Draufsicht eine etwa kreisrunde oder runde Außenumfangskontur. Der sich über den Mittelabschnitt 67 erstreckende Bereich der Auflagefläche 66 oder Tragwand 65 hat eine rechteckige Außenumfangskontur, sodass die Auflagefläche 66 insgesamt eine schlüssellochartige Außenumfangskontur hat.

Der Tragwand 65 liegt eine Bodenwand 68 des Haltearms 60 gegenüber, die durch Verbindungsstege 69A, 69B, 69C sowie eine Seitenwand 70 des Stützvorsprungs 63 verbunden ist. Die Verbindungsstege 69A, 69B, 69C bilden beispielsweise Verbindungsrippen zwischen der Tragwand 65 und der Bodenwand 68. Der Verbindungssteg 69A ist beispielsweise im Bereich des Befestigungszapfens 51, also am Längsende 61 vorgesehen. Die Verbindungsstege 69B, 69C sind am Mittelabschnitt 67 zwischen den Längsenden 61, 62 vorgesehen. Die Seitenwand 70 des Stützvorsprungs 63 ist am Längsende 62 vorgesehen.

Die Tragwand 65 und die Bodenwand 68 verlaufen parallel zueinander. Somit ist also beispielsweise eine Normalenrichtung N einer Flachseite 65F der Tragwand 65 gleichzeitig eine Normalenrichtung N einer Flachseite 68F der Bodenwand 68. Die Flachseiten 65F, 68F sind einander entgegengesetzte Außenseiten des Haltearms 60.

Der Stützvorsprung 63 weist eine der Seitenwand 70 gegenüberliegende Wand 71 auf. Die Seitenwand 70 und die Wand 71 sind durch Verbindungsstege 72A, 72B, 72C, 72D miteinander verbunden. Die Verbindungsstege 72A, 72C erstrecken sich sozusagen in Verlängerung der Tragwand 65. Die Verbindungsstege 72B, 72D sind im Bereich oder an der Stützfläche 64 vorgesehen. Die Stützfläche 64 ist insbesondere an den von der Bodenwand 68 abgewandten Stirnseiten der Seitenwand 70 sowie der Wand 71 vorgesehen.

Die beiden Wände 70, 71 verlaufen rechtwinkelig zur Haltearm-Längsachse HL und rechtwinkelig zu der Tragwand 65 und der Bodenwand 68. Die Verbindungswand 72 verläuft parallel zu der Tragwand 65 und der Bodenwand 68.

Zwischen der Tragwand 65 und der Bodenwand 68 sind Befestigungsband-Halteaufnahmen 73A, 73B sowie 74 gebildet, die quer zur Tragwand 65 und Bodenwand 68 durch die Verbindungsstege 69A-69C sowie die Seitenwand 70 begrenzt sind.

Am Stützvorsprung 63 sind weitere Befestigungsband-Halteaufnahmen 75, 76 angeordnet, die durch die Wand 71 und die Seitenwand 70 sowie die Verbindungsstege 72A, 72B, 72C, 72D begrenzt sind.

Die Befestigungsband-Halteaufnahmen 73A, 74,73B und 75 haben zueinander parallele Durchsteckachsen D1, D2, D3 und D4. Eine Durchsteckachse D5 der Befestigungsband-Halteaufnahme 76 hingegen verläuft orthogonal zu den Durchsteckachsen D1, D2, D3 und D4.

Die Befestigungsband-Halteaufnahmen 73A, 74,73B sind in einer Reihenanordnung nebeneinander am Haltearm 60 angeordnet. Ihre Durchsteckachsen D1, D2, D3 liegen in einer Mittelebene MI1. Dadurch kann ein Befestigungsband 85 in unterschiedlichsten, nämlich in insgesamt drei zueinander orthogonalen Orientierungen, an der Befestigungsvorrichtung 50 befestigt werden.

Die Durchsteckachse D4 liegt in einer Mittelebene MI2 der Befestigungsband-Halteaufnahme 75, die zu der Mittelebene MI1 orthogonal ist. Die Durchsteckachse D5 der Befestigungsband-Halteaufnahme 76 verläuft ebenfalls in der Mittelebene MI2.

Die Befestigungsband-Halteaufnahmen 75 und 76 hingegen sind am Stützvorsprung 63 vorgesehen. Die Steckkanäle 78 der Befestigungsband-Halteaufnahmen 75 und 76 kreuzen sich und kommunizieren miteinander. Somit kann wahlweise das Befestigungsband 85 in eine der Befestigungsband-Halteaufnahmen 75 oder 76 eingesteckt werden.

Die Befestigungsband-Halteaufnahmen 73A, 73B haben Steckkanäle 77 mit einer Flachgestalt. Auch die Steckkanäle 78 der Befestigungsband-Halteaufnahmen 74, 75, 76 haben eine Flachgestalt. Somit kann ein Befestigungsband 85, beispielsweise ein Kabelbinder 85A, verdrehsicher in den Steckkanäle 77, 78 geführt werden.

Das Befestigungsband 85 weist einen Bandkörper 86 auf, an dessen einem Längsende 87A Rastkonturen 88 und an dessen anderem Längsende eine Rast-Halterung 89 vorgesehen sind. Das Längsende 87A bildet ein Steckende, welches in eine Durchstecköffnung 89A der Rast-Halterung 89 durchsteckbar ist. In die Durchstecköffnung 89A steht eine Rastnase 89B zum Verrasten mit den Rastkonturen 88 vor. Die Rastnase 89B greift hakenartige in die Rastkonturen 88 ein, wenn das Längsende 87A durch die Durchstecköffnung 89A in einer Steckrichtung SA durchgesteckt wird, sodass das Längsende 87A nicht mehr aus der Rast-Halterung 89 entgegen der Steckrichtung SA herausziehbar ist.

Der Bandkörper 86 weist eine Flachgestalt mit Längsschmalseiten 86A, zwischen denen sich Flachseiten 86B erstrecken.

Die Flachseiten 86B liegen dann, wenn das Befestigungsband 85 in einen jeweiligen Steckkanal 77 oder 78 eingesteckt ist, einander gegenüberliegenden Führungswänden 80, 82 gegenüber. Die jeweils einander gegenüberliegenden Führungswände 80 und die jeweils einander gegenüberliegenden Führungswände 82 haben einen Querabstand Q2. Quer zu den Führungswänden 80 verlaufen Seitenwände 81 in einem Querabstand Q1, der größer ist als der Querabstand Q2. Seitenwände 83 der Steckkanäle 77 haben einen Querabstand Q3 zueinander, der größer ist als der Abstand Q1.

Die Längsschmalseiten 86A liegen bei den Steckkanälen 78 an Seitenwänden 81 derselben an. Die Steckkanäle 77 sind jedoch etwas breiter, sodass ein Querabstand zwischen den Längsschmalseiten 86A des Bandkörpers 86 und Seitenwänden 83 der Steckkanäle 77 vorhanden ist.

Zur besseren Führung kann beispielsweise ein Führungsvorsprung 79 in den Steckquerschnitt des Steckkanals 77 oder 78 vorstehen, sodass sich eine der Flachseiten 86B am Führungsvorsprung 79 abgestützt ist und die zu dieser Flachseite 86B entgegengesetzte Flachseite 86B des Bandkörpers 86 an der dem Führungsvorsprung 79 gegenüberliegenden Führungswand 80 geführt ist. Zwischen den Führungswänden 80. Der Führungsvorsprung 79 kann beispielsweise in eine Vertiefung 86C an den Flachseiten 86B eingreifen, die zwischen den Längsschmalseiten 86A entlang der Längserstreckung des Bandkörpers 86 gebildet ist. An den Längsschmalseiten 86A können beispielsweise Wulste 86D vorgesehen sein.

Die Anordnung der Führungsvorsprünge 79 kann die Orientierung des jeweiligen Bandkörpers 86 in dem Steckkanal 77 oder 78 beeinflussen. Beispielsweise stehen bei der Befestigungsvorrichtung 50 die Führungsvorsprünge 79 von der Tragwand 65 und der Wand 71 ab, sodass die Vertiefung 86C des in den Stecckanals 77 oder 78 eingesteckten Bandkörpers 86 von der Fläche 18 des Befestigungsobjekts 19 abgewandt ist. Bei einer Befestigungsvorrichtung 50A, die im Wesentlichen identisch mit der Befestigungsvorrichtung 50 ist, stehen die Führungsvorsprünge 79 in genau entgegengesetzter Orientierung in die jeweiligen Steckkanäle 77 und 78 vor, stehen also beispielsweise von der Bodenwand 68 und der Seitenwand 70 her in die Steckkanäle 78 vor.

Allein schon aufgrund der mehreren, in Bezug auf die Haltearm-Längsachse HL nebeneinander angeordneten Befestigungsband-Halteaufnahmen 73A, 73B und 74 bestehen zahlreiche Möglichkeiten, das Befestigungsband 85 an der Befestigungsvorrichtung 50 zu befestigen und somit die Leitung 40 in verschiedenen Längspositionen bezüglich der Haltearm-Längsachse HL an der Befestigungsvorrichtung zu befestigen. Dabei kann sich die Leitung 40 beispielsweise längs der Haltearm-Längsachse HL auf der Auflagefläche 66 abstützen oder parallel zur Haltearm-Längsachse HL verlaufen. Ein jeweiliges Befestigungsband 85 wird dabei zu einer Schlaufe geformt, indem nämlich das Längsende 87A durch eine der Durchstecköffnungen oder Befestigungsband-Halteaufnahmen 73A, 73B oder 74 durchgesteckt, um die Leitung 40 herum geschlungen und dann in die Rast-Halterung 89 eingesteckt wird. Selbstverständlich können mehrere Befestigungsbänder 85 die Leitung 40 an der Befestigungsvorrichtung 50 halten, beispielsweise ein Befestigungsband 85, welches durch die Halteaufnahme 73 A geführt ist und ein weiteres Befestigungsband 85, welches durch die Halteaufnahme 74 oder 75 geführt ist.

## Patentansprüche

1. Anhängekupplung (10) für ein Kraftfahrzeug mit einem Kupplungsarm (23), an dessen freiem Endbereich (22) ein Kupplungselement (20), insbesondere eine Kupplungskugel, zum Anhängen eines Anhängers (95) oder Befestigen eines Lastenträgers angeordnet ist, wobei die Anhängekupplung (10) mindestens eine Befestigungsvorrichtung (50) zur Befestigung einer Leitung (40) an einem einen Bestandteil der Anhängekupplung (10) bildenden Befestigungsobjekt (19), insbesondere an dem Kupplungsarm (23) und/oder einer an dem Kraftfahrzeug befestigten oder befestigbaren Trägeranordnung (11), aufweist, wobei die Befestigungsvorrichtung (50) einen Befestigungszapfen (51) zum Einstecken in eine Befestigungsaufnahme (16) des Befestigungsobjektes (19) entlang einer Befestigungszapfen-Längsachse (BL) aufweist, wobei von dem Befestigungszapfen (51) quer zu der Befestigungszapfen-Längsachse (BL) ein Haltearm (60) absteht, der sich entlang einer Haltearm-Längsachse (HL) erstreckt und an dem eine Befestigungsband-Halteaufnahme (73A, 73B, 74, 75, 76) mit einem Steckkanal (77, 78) zum Durchstecken eines flexiblen Befestigungsbandes (85), insbesondere eines Kabelbinders (85A), angeordnet ist, **dadurch gekennzeichnet, dass** an dem Haltearm (60) mindestens zwei Befestigungsband-Halteaufnahmen (73A, 73B, 74, 75, 76) angeordnet sind.

2. Anhängekupplung nach Anspruch 1, **dadurch gekennzeichnet, dass** die Haltearm-Längsachse (HL) und die Befestigungszapfen-Längsachse (BL) zueinander rechtwinkelig sind.

3. Anhängekupplung nach Anspruch 1 oder 2, **dadurch gekennzeichnet, dass** der Befestigungszapfen (51) am einen Längsende (61, 62) des Haltearms (60) angeordnet ist und der Haltearm (60) mit einem, insbesondere einem einzigen, freien Längsende (61, 62) von dem Befestigungszapfen (51) absteht.

4. Anhängekupplung nach einem der vorhergehenden Ansprüche, **dadurch gekennzeichnet, dass** von dem Haltearm (60) in einem Längsabstand bezüglich der Haltearm-Längsachse (HL), insbesondere zur selben Seite des Haltearms (60), der Befestigungszapfen (51) und ein Stützvorsprung (63) mit einer Stützfläche (64) vorstehen, die zur Abstützung des Haltearms (60) an dem Befestigungsobjekt (19) neben der Befestigungsaufnahme (16) vorgesehen ist.

5. Anhängekupplung nach Anspruch 4, **dadurch gekennzeichnet, dass** der Stützvorsprung (63) und der Befestigungszapfen (51) in Bezug auf die Haltearm-Längsachse (HL) an einander entgegengesetzten Längsenden (61, 62) des Haltearms (60) angeordnet sind und/oder dass der Stützvorsprung (63) rechtwinkelig zu der Haltearm-Längsachse (HL) und/oder parallel zu der Befestigungszapfen-Längsachse (BL) verläuft.

6. Anhängekupplung nach einem der vorhergehenden Ansprüche, **dadurch gekennzeichnet, dass** zwischen dem Haltearm (60) und dem Befestigungszapfen (51) vor den Befestigungszapfen (51) quer zur Befestigungszapfen-Längsachse (BL), insbesondere zu der Haltearm-Längsachse (HL) parallel, eine, insbesondere an einem Stützflansch (57) oder Flanschvorsprung vorgesehene, Anschlagfläche (56) zum Abstützen an dem Befestigungsobjekt (19) neben der Befestigungsaufnahme (16) vorsteht, wobei vorteilhaft vorgesehen ist, dass die Anschlagfläche (56) an dem Befestigungszapfen (51) und die Stützfläche (64) des Stützvorsprungs (63) des Haltearms (60) in derselben, insbesondere zu der Haltearm-Längsachse (HL) parallelen, Ebene angeordnet sind.

7. Anhängekupplung nach einem der vorhergehenden Ansprüche, **dadurch gekennzeichnet, dass** ein Steckquerschnitt mindestens einer Befestigungsband-Halteaufnahme (73A, 73B, 74, 75, 76) eine Flachgestalt und/oder einen rechteckigen Steckquerschnitt aufweist und/oder eine Innenumfangskontur zum verdrehsicheren Aufnehmen des Befestigungsbandes (85) aufweist und/oder zum ortsfesten Halten des Befestigungsbandes (85) quer zur Durchsteckachse (D1-D5) ausgestaltet ist oder mindestens einen Bewegungsfreiheitsgrad für das Befestigungsband (85) bereitstellt, der von einem linearen Bewegungsfreiheitsgrad bezüglich der Durchsteckachse (D1-D5) verschieden ist.

8. Anhängekupplung nach einem der vorhergehenden Ansprüche, **dadurch gekennzeichnet, dass** mindestens eine Befestigungsband-Halteaufnahme (73A, 73B, 74, 75, 76) einen in ihren zum Durchstecken des Befestigungsbandes (85) vorgesehenen Steckquerschnitt, insbesondere zum Eingreifen in einen Zwischenraum zwischen Längsseiten des Befestigungsbandes (85), vorstehenden Führungsvorsprung (79) aufweist und/oder dass die Befestigungsvorrichtung (50) mindestens zwei Befestigungsband-Halteaufnahmen (73A, 73B, 74, 75, 76) aufweist, deren Durchsteckachsen (D1-D5) zueinander winkelig, insbesondere rechtwinkelig sind und/oder sich kreuzen und/oder in derselben Ebene (MI1, MI2) liegen.

9. Anhängekupplung nach einem der vorhergehenden Ansprüche, **dadurch gekennzeichnet, dass** die Befestigungsvorrichtung (50) mindestens eine Befestigungsband-Halteaufnahme (73A, 73B, 74, 75, 76) aufweist, deren Durchsteckachse (D1-D5) quer, insbesondere rechtwinkelig quer, zur Haltearm-Längsachse (HL) verläuft, und/oder dass mindestens zwei Befestigungsband-Halteaufnahmen (73A, 73B, 74, 75, 76) sich insbesondere rechtwinkelig kreuzende Steckkanäle (77, 78) zum Durchstecken eines jeweiligen Befestigungsbandes (85) aufweisen.

10. Anhängekupplung nach einem der vorhergehenden Ansprüche, **dadurch gekennzeichnet, dass** die Befestigungsvorrichtung (50) mindestens zwei, vorzugsweise drei, Befestigungsband-Halteaufnahmen (73A, 73B, 74, 75, 76) aufweist, die Steckkanäle (77, 78) zum Durchstecken eines Befestigungsbandes (85) aufweisen, wobei die Steckkanäle (77, 78) eine Flachgestalt mit einander gegenüberliegenden Führungswänden (80) aufweist, die einer Mittelebene (MI1, MI2) des jeweiligen Steckkanals (77, 78) gegenüberliegen und deren Quererstreckung (Q1) quer zur Durchsteckachse (D1-D5) größer ist als eine Quererstreckung (Q2) von zu diesen Führungswänden (80) winkeligen, insbesondere rechtwinkeligen Seitenwänden (81) des Steckkanals (77, 78) quer zur Durchsteckachse (D1-D5) ist, und wobei die Mittelebenen (MI1, M12) mindestens zweier Steckkanäle (77, 78) zueinander winkelig, insbesondere rechtwinkelig, sind.

11. Anhängekupplung nach einem der vorhergehenden Ansprüche, **dadurch gekennzeichnet, dass** mindestens eine Befestigungsband-Halteaufnahme (73A, 73B, 74, 75, 76) zwischen Längsenden (61, 62) des Haltearms (60) angeordnet ist und/oder dass mindestens eine Befestigungsband-Halteaufnahme (73A, 73B, 74, 75, 76), vorzugsweise mindestens zwei oder exakt zwei Befestigungsband-Halteaufnahmen (73A, 73B, 74, 75, 76), an dem oder einem von dem Befestigungszapfen (51) entfernten Längsende (61, 62) des Haltearms (60) angeordnet ist.

12. Anhängekupplung nach einem der vorhergehenden Ansprüche, **dadurch gekennzeichnet, dass** der Haltearm (60) an seiner von dem Befestigungszapfen (51) abgewandten Seite eine sich entlang seiner Haltearm-Längsachse (HL) erstreckende Auflagefläche (66), insbesondere für eine anhand des Befestigungsbandes (85) an der Befestigungsvorrichtung (50) gehaltene Leitung (40), aufweist.

13. Anhängekupplung nach einem der vorhergehenden Ansprüche, **dadurch gekennzeichnet, dass** der Haltearm (60) eine Tragwand (65) und eine dieser gegenüberliegende Bodenwand (68) aufweist, die durch mindestens einen Verbindungssteg (69A, 69B, 69C) und/oder mindestens eine Seitenwand (70) miteinander verbunden sind, wobei zwischen der Tragwand (65) und der Bodenwand (68) mindestens eine Befestigungsband-Halteaufnahme (73A, 73B) ausgebildet ist, die durch den mindestens einen Verbindungssteg (69A, 69B, 69C) und/oder die mindestens eine Seitenwand (70) begrenzt ist, wobei vorteilhaft vorgesehen ist, dass die mindestens eine Befestigungsband-Halteaufnahme (73A, 73B) zu der Tragwand (65) und der Bodenwand (68) parallel verlaufende Flachseiten aufweist und Schmalseiten der mindestens einen Befestigungsband-Halteaufnahme (73A, 73B) quer, insbesondere rechtwinkelig quer, zu der Tragwand (65) und der Bodenwand (68) verlaufen.

14. Anhängekupplung nach einem der vorhergehenden Ansprüche, **dadurch gekennzeichnet, dass** die Befestigungsvorrichtung (50) mindestens eine Befestigungsband-Halteaufnahme (76) aufweist, deren Durchsteckachse (D5) quer, insbesondere rechtwinkelig, zu einer Flachseite des Haltearms (60) und/oder parallel zu einer Normalenrichtung der Flachseite verläuft, wobei die Flachseite vorzugsweise an einer Bodenwand (68) oder einer Tragwand (65) vorgesehen ist, und/oder dass die Befestigungsvorrichtung (50) mindestens eine, insbesondere an einem oder dem Stützvorsprung (63) angeordnete, Befestigungsband-Halteaufnahme (76) aufweist, deren Durchsteckachse (D5) sich parallel oder etwa parallel zu der Befestigungszapfen-Längsachse (BL) erstreckt.

15. Anhängekupplung nach einem der vorhergehenden Ansprüche, **dadurch gekennzeichnet, dass** sie ein Befestigungsband (85) aufweist, wobei das Befestigungsband (85) als Kabelbinder (85A) ausgestaltet ist und einen Bandkörper (86) aufweist, der am einen Längsende (87A) ein Steckende mit Rastkonturen (88) und am anderen Längsende (87B) eine Rast-Halterung (89) zum Einstecken des Steckendes in einer Steckrichtung (SA) aufweist, wobei die Rast-Halterung (89) in Rasteingriff mit den Rastkonturen (88) derart bringbar ist, dass das Steckende zugfest in der Rast-Halterung (89) entgegen der Steckrichtung (SA) gehalten ist.

## Claims

1. Trailer coupling (10) for a motor vehicle, having a coupling arm (23), at the free end region (22) of which a coupling element (20), in particular a coupling ball, is located for attaching a trailer (95) or for fastening a load carrier, wherein the trailer coupling (10) has at least one fastening device (50) for attaching a line (40) to a fastening object (19), in particular to the coupling arm (23), forming a component of the trailer coupling (10), and/or to a carrier assembly (11) which is or can be fastened at the motor vehicle, wherein the fastening device (50) has a fastening pin (51) for insertion into a fastening receptacle (16) of the fastening object (19) along a fastening pin longitudinal axis (BL), wherein from the fastening pin (51), transversely to the fastening pin longitudinal axis (BL), there projects a holding arm (60), which extends along a holding arm longitudinal axis (HL) and at which is located a fastening tape holding receptacle (73A, 73B, 74, 75, 76) with a plug-in channel (77, 78) for passing through a flexible fastening tape (85), in particular a cable tie (85A), **characterised in that** at least two fastening tape holding receptacles (73A, 73B, 74, 75, 76) are located at the holding arm (60).

2. Trailer coupling according to claim 1, **characterised in that** the holding arm longitudinal axis (HL) and the fastening pin longitudinal axis (BL) are oriented at right angles to each other.

3. Trailer coupling according to claim 1 or 2, **characterised in that** the fastening pin (51) is located at a longitudinal end (61, 62) of the holding arm (60) and the holding arm (60) projects from the fastening pin (51) with one, in particular a single, free longitudinal end (61, 62).

4. Trailer coupling according to any of the preceding claims, **characterised in that**, from the holding arm (60), there project at a longitudinal distance with respect to the holding arm longitudinal axis (HL), in particular to the same side of the holding arm (50), the fastening pin (51) and a support projection (63) with a support surface (64) provided for supporting the holding arm (60) at the fastening object (19) adjacent to the fastening receptacle (16).

5. Trailer coupling according to claim 4, **characterised in that** the support projection (63) and the fastening pin (51) are located at mutually opposite longitudinal ends (61, 62) of the holding arm (60) with respect to the holding arm longitudinal axis (HL), and/or **in that** the support projection (63) extends at right angles to the holding arm longitudinal axis (HL) and/or parallel to the fastening pin longitudinal axis (BL).

6. Trailer coupling according to any of the preceding claims, **characterised in that**, between the holding arm (60) and the fastening pin (51), there projects in front of the fastening pin (51), transversely to the fastening pin longitudinal axis (BL), in particular parallel to the holding arm longitudinal axis (HL), a stop surface (56) provided at a support flange (57) or flange projection in particular for supporting at the fastening object (19) adjacent to the fastening receptacle (16), wherein it is advantageously provided that the stop surface (56) at the fastening pin (51) and the support surface (64) of the support projection (63) of the holding arm (60) are located in the same plane, which is parallel to the holding arm longitudinal axis (HL) in particular.

7. Trailer coupling according to any of the preceding claims, **characterised in that** a plug-in cross-section of at least one fastening tape holding receptacle (73A, 73B, 74, 75, 76) has a flat shape and/or a rectangular plug-in cross-section and/or an inner circumferential contour for the non-rotatable accommodation of the fastening tape (85) and/or is designed for the fixed holding of the fastening tape (85) transversely to the plug-through axis (D1-D5) or provides at least one degree of freedom of movement for the fastening tape (85), which differs from a linear degree of freedom of movement with respect to the plug-through axis (D1-D5).

8. Trailer coupling according to any of the preceding claims, **characterised in that** at least one fastening tape holding receptacle (73A, 73B, 74, 75, 76) has a guide projection (79) in its plug-in cross-section provided for plugging through the fastening tape (85), in particular for engagement with a gap between longitudinal sides of the fastening tape (85), and/or **in that** the fastening device (50) has at least two fastening tape holding receptacles (73A, 73B, 74, 75, 76), the plug-through axes (D1-D5) of which are oriented at an angle, in particular a right angle, to one another and/or intersect and/or lie in the same plane (MI1, MI2).

9. Trailer coupling according to any of the preceding claims, **characterised in that** the fastening device (50) has at least one fastening tape holding receptacle (73A, 73B, 74, 75, 76), the plug-through axis (D1-D5) of which extends transversely, in particular at right angles, to the holding arm longitudinal axis (HL), and/or **in that** at least two fastening tape holding receptacles (73A, 73B, 74, 75, 76) have plug-in channels (77, 78) which intersect at right angles in particular for plugging through a respective fastening tape (85).

10. Trailer coupling according to any of the preceding claims, **characterised in that** the fastening device (50) has at least two, preferably three, fastening tape holding receptacles (73A, 73B, 74, 75, 76), which have plug-in channels (77, 78) for plugging through a fastening tape (85), wherein the plug-in channels (77, 78) have a flat shape with mutually opposite guide walls (80), which lie opposite a central plane (MI1, MI2) of the respective plug-in channel (77, 78) and the transverse extent (Q1) of which, transversely to the plug-through axis (D1-D5), is greater than a transverse extent (Q2) of side walls (81) of the plug-in channel (77, 78), which extend at an angle, in particular a right angle, to said guide walls (80) transversely to the plug-through axis (D1-D5), and wherein the central planes (MI1, MI2) of at least two plug-in channels (77, 78) are oriented at an angle, in particular a right angle, to one another.

11. Trailer coupling according to any of the preceding claims, **characterised in that** at least one fastening tape holding receptacle (73A, 73B, 74, 75, 76) is located between longitudinal ends (61, 62) of the holding arm (60), and/or **in that** at least one fastening tape holding receptacle (73A, 73B, 74, 75, 76), preferably at least two or precisely two, fastening tape holding receptacles (73A, 73B, 74, 75, 76), is/are located at the or at one longitudinal end (61, 62) of the holding arm (60) which is remote from the fastening pin (51).

12. Trailer coupling according to any of the preceding claims, **characterised in that** the holding arm (60) has on its side averted from the fastening pin (51) a locating surface (66) extending along its holding arm longitudinal axis (HL), in particular for a line (40) held at the fastening device (50) by means of the fastening tape (85).

13. Trailer coupling according to any of the preceding claims, **characterised in that** the holding arm (60) has a support wall (65) and a base wall (68) located opposite the former, which are joined to each other by at least one connecting web (69A, 69B, 69C) and/or at least one side wall (70), wherein at least one fastening tape holding receptacle (73A, 73B) bounded by the at least one connecting web (69A, 69B, 69C) and/or the at least one side wall (70) is formed between the support wall (65) and the base wall (68), wherein it is advantageously provided that the at least one fastening tape holding receptacle (73A, 73B) has flat sides which extend parallel to the support wall (65) and the base wall (68) and narrow sides of the at least one fastening tape holding receptacle (73A, 73B) extend transversely, in particular at right angles, to the support wall (65) and the base wall (68).

14. Trailer coupling according to any of the preceding claims, **characterised in that** the fastening device (50) has at least one fastening tape holding receptacle (76), the plug-through axis (D5) of which extends transversely, in particular at right angles, to a flat side of the holding arm (60) and/or parallel to a normal direction of the flat side, wherein the flat side is preferably provided at a base wall (68) or a support wall (65), and/or **in that** the fastening device (50) has at least one fastening tape holding receptacle (76), which is in particular located at one or at the support projection (63) and the plug-through axis (D5) of which extends parallel or approximately parallel to the fastening pin longitudinal axis (BL).

15. Trailer coupling according to any of the preceding claims, **characterised in that** it has a fastening tape (85), wherein the fastening tape (85) is designed as a cable tie (85A) and has a tape body (86), which has a plug-in end with latching contours (88) at one longitudinal end (87A) and a latching holder (89) for inserting the plug-in end in a plug-in direction (SA) at the other longitudinal end (87B), wherein the latching holder (89) can be brought into latching engagement with the latching contours (88) in such a way that the plug-in end is held in the latching holder (89) so as to be resistant to pullout against the plug-in direction (SA).

## Revendications

1. Attelage de remorque (10) pour un véhicule à moteur avec un bras d'attelage (23), sur la zone d'extrémité libre (22) duquel un élément d'attelage (20), en particulier une boule d'attelage, est disposé pour atteler une remorque (95) ou fixer un support de charges, dans lequel l'attelage de remorque (10) présente au moins un dispositif de fixation (50) destiné à fixer un câble (40) sur un objet de fixation (19) faisant partie intégrante de l'attelage de remorque (10), en particulier sur le bras d'attelage (23) et/ou sur un ensemble de support (11) fixé ou pouvant être fixé sur le véhicule à moteur, dans lequel le dispositif de fixation (50) présente un tourillon de fixation (51) destiné à être enfiché dans un logement de fixation (16) de l'objet de fixation (19) le long d'un axe longitudinal de tourillon de fixation (BL), dans lequel un bras de maintien (60), qui s'étend le long d'un axe longitudinal de bras de maintien (HL) et sur lequel un logement de maintien de bande de fixation (73A, 73B, 74, 75, 76) est disposé avec un canal d'enfichage (77, 78) destiné à faire passer par enfichage une bande de fixation flexible (85), en particulier un serre-câbles (85A), est disposé, dépasse du tourillon de fixation (51) de manière transversale par rapport à l'axe longitudinal de tourillon de fixation (BL), **caractérisé en ce qu'**au moins deux logements de maintien de bande de fixation (73A, 73B, 74, 75, 76) sont disposés sur le bras de maintien (60).

2. Attelage de remorque selon la revendication 1, **caractérisé en ce que** l'axe longitudinal de bras de maintien (HL) et l'axe longitudinal de tourillon de fixation (BL) forment un angle droit l'un par rapport à l'autre.

3. Attelage de remorque selon la revendication 1 ou 2, **caractérisé en ce que** le tourillon de fixation (51) est disposé sur une extrémité longitudinale (61, 62) du bras de maintien (60) et le bras de maintien (60) dépasse du tourillon de fixation (51) avec une extrémité longitudinale (61, 62) libre, en particulier une extrémité longitudinale unique.

4. Attelage de remorque selon l'une quelconque des revendications précédentes, **caractérisé en ce que** le tourillon de fixation (51) et une partie faisant saillie d'appui (63) font saillie avec une surface d'appui (64), laquelle est prévue pour soutenir le bras de maintien (60) sur l'objet de fixation (19) à côté du logement de fixation (16), du bras de maintien (60) à une distance longitudinale par rapport à l'axe longitudinal de bras de maintien (HL), en particulier vers le même côté du bras de maintien (60).

5. Attelage de remorque selon la revendication 4, **caractérisé en ce que** la partie faisant saillie d'appui (63) et le tourillon de fixation (51) sont disposés par rapport à l'axe longitudinal de bras de maintien (HL) sur des extrémités longitudinales (61, 62) opposées les uns aux autres du bras de maintien (60), et/ou que la partie faisant saillie d'appui (63) s'étend à angle droit par rapport à l'axe longitudinal de bras de maintien (HL) et/ou de manière parallèle par rapport à l'axe longitudinal de tourillon de fixation (BL).

6. Attelage de remorque selon l'une quelconque des revendications précédentes, **caractérisé en ce qu'**une surface de butée (56), prévue en particulier sur un flasque d'appui (57) ou une partie faisant saillie de flasque, destinée à être soutenue sur l'objet de fixation (19) à côté du logement de fixation (16) fait saillie de manière parallèle entre le bras de maintien (60) et le tourillon de fixation (51) devant le tourillon de fixation (51) de manière transversale par rapport à l'axe longitudinal de tourillon de fixation (BL), en particulier par rapport à l'axe longitudinal de bras de maintien (HL), dans lequel il est prévu de manière avantageuse que la surface de butée (56) sur le tourillon de fixation (51) et la surface d'appui (64) de la partie faisant saillie d'appui (63) du bras de maintien (60) sont disposées dans le même plan parallèle en particulier à l'axe longitudinal de bras de maintien (HL).

7. Attelage de remorque selon l'une quelconque des revendications précédentes, **caractérisé en ce qu'**une section transversale d'enfichage d'au moins un logement de maintien de bande de fixation (73A, 73B, 74, 75, 76) présente une forme plate et/ou une section transversale d'enfichage rectangulaire, et présente un contour périphérique intérieur destiné à loger de manière à empêcher toute rotation la bande de fixation (85) et/ou est configurée pour maintenir de manière stationnaire la bande de fixation (85) de manière transversale par rapport à l'axe de passage par enfichage (D1 - D5) ou fournit au moins un degré de liberté de mouvement pour la bande de fixation (85), qui est différent d'un degré de liberté de mouvement linéaire par rapport à l'axe de passage par enfichage (D1 - D5).

8. Attelage de remorque selon l'une quelconque des revendications précédentes, **caractérisé en ce qu'**au moins un logement de maintien de bande de fixation (73A, 73B, 74, 75, 76) présente une partie faisant saillie de guidage (79) faisant saillie dans sa section transversale d'enfichage prévue pour le passage par enfichage de la bande de fixation (85), en particulier destinée à venir en prise avec un espace intermédiaire entre des côtés longitudinaux de la bande de fixation (85), et/ou que le dispositif de fixation (50) présente au moins deux logements de maintien de bande de fixation (73A, 73B, 74, 75, 76), dont les axes de passage par enfichage (D1 - D5) forment les uns par rapport aux autres un angle, en particulier un angle droit et/ou se croisent et/ou se situent dans le même plan (MI1, MI2).

9. Attelage de remorque selon l'une quelconque des revendications précédentes, **caractérisé en ce que** le dispositif de fixation (50) présente au moins un logement de maintien de bande de fixation (73A, 73B, 74, 75, 76), dont l'axe de passage par enfichage (D1 - D5) s'étend de manière transversale, en particulier à angle droit de manière transversale par rapport à l'axe longitudinal de bras de maintien (HL), et/ou qu'au moins deux logements de maintien de bande de fixation (73A, 73B, 74, 75, 76) présentent des canaux d'enfichage (77, 78) se croisant en particulier à angle droit, destinés à faire passer par enfichage une bande de fixation (85) respective.

10. Attelage de remorque selon l'une quelconque des revendications précédentes, **caractérisé en ce que** le dispositif de fixation (50) présente au moins deux, de préférence trois, logements de maintien de bande de fixation (73A, 73B, 74, 75, 76), qui présentent des canaux d'enfichage (77, 78) destinés à faire passer par enfichage une bande de fixation (85), dans lequel les canaux d'enfichage (77, 78) présentent une forme plate avec des parois de guidage (80) se faisant face les unes les autres, qui font face à un plan central (MI1, MI2) du canal d'enfichage (77, 78) respectif et dont l'extension transversale (Q1) de manière transversale par rapport à l'axe de passage par enfichage (D1 - D5) est plus grande qu'une extension transversale (Q2) de parois latérales (81) formant un angle, en particulier un angle droit par rapport auxdites parois de guidage (80), du canal d'enfichage (77, 78) de manière transversale par rapport à l'axe de passage par enfichage (D1 - D5), et dans lequel les plans centraux (MI1, MI2) d'au moins deux canaux d'enfichage (77, 78) forment un angle l'un par rapport à l'autre, en particulier un angle droit.

11. Attelage de remorque selon l'une quelconque des revendications précédentes, **caractérisé en ce qu'**au moins un logement de maintien de bande de fixation (73A, 73B, 74, 75, 76) est disposé entre des extrémités longitudinales (61, 62) du bras de maintien (60) et/ou qu'au moins un logement de maintien de bande de fixation (73A, 73B, 74, 75, 76), de préférence au moins deux ou précisément deux logements de maintien de bande de fixation (73A, 73B, 74, 75, 76), est disposé sur l'extrémité longitudinale ou une extrémité longitudinale (61, 62) du bras de maintien (60) éloignée du tourillon de fixation (51).

12. Attelage de remorque selon l'une quelconque des revendications précédentes, **caractérisé en ce que** le bras de maintien (60) présente, sur son côté détourné du tourillon de fixation (51), une surface de réception (66) s'étendant le long de l'axe longitudinal de bras de maintien (HL), en particulier pour un câble (40) maintenu sur le dispositif de fixation (50) à l'aide d'une bande de fixation (85).

13. Attelage de remorque selon l'une quelconque des revendications précédentes, **caractérisé en ce que** le bras de maintien (60) présente une paroi de support (65) et une paroi de fond (68) faisant face à celle-ci, qui sont reliées l'une à l'autre par au moins une entretoise de liaison (69A, 69B, 69C) et/ou au moins une paroi latérale (70), dans lequel est réalisé entre la paroi de support (65) et la paroi de fond (68) au moins un logement de maintien de bande de fixation (73A, 73B), qui est délimité par l'au moins une entretoise de liaison (69A, 69B, 69C) et/ou l'au moins une paroi latérale (70), dans lequel il est prévu de manière avantageuse que l'au moins un logement de maintien de bande de fixation (73A, 73B) présente des côtés plats s'étendant de manière parallèle par rapport à la paroi de support (65) et à la paroi de fond (68) et des côtés étroits de l'au moins un logement de maintien de bande de fixation (73A, 73B) s'étendent de manière transversale, en particulier à angle droit de manière transversale, par rapport à la paroi de support (65) et à la paroi de fond (68).

14. Attelage de remorque selon l'une quelconque des revendications précédentes, **caractérisé en ce que** le dispositif de fixation (50) présente au moins un logement de maintien de bande de fixation (76), dont l'axe de passage par enfichage (D5) s'étend de manière transversale, en particulier à angle droit, par rapport à un côté plat du bras de maintien (60) et/ou de manière parallèle par rapport à une direction normale du côté plat, dans lequel le côté plat est prévu de préférence sur une paroi de fond (68) ou une paroi de support (65), et/ou que le dispositif de fixation (50) présente au moins un logement de maintien de bande de fixation (76) disposé en particulier sur une ou la partie faisant saillie d'appui (63), dont l'axe de passage par enfichage (D5) s'étend de manière parallèle ou légèrement de manière parallèle par rapport à l'axe longitudinal de tourillon de fixation (BL).

15. Attelage de remorque selon l'une quelconque des revendications précédentes, **caractérisé en ce qu'**il présente une bande de fixation (85), dans lequel la bande de fixation (85) est configurée en tant que serre-câbles (85A) et présente un corps de bande (86), qui présente sur une extrémité longitudinale (87A) une extrémité d'enfichage avec des contours d'enclenchement (88) et sur l'autre extrémité longitudinale (87B) une fixation d'enclenchement (89) destinée à enficher l'extrémité d'enfichage dans une direction d'enfichage (SA), dans lequel la fixation d'enclenchement (89) peut être amenée en prise par enclenchement avec les contours d'enclenchement (88) de telle manière que l'extrémité d'enfichage est maintenue de manière résistante à la traction dans la fixation d'enclenchement (89) à l'opposé de la direction d'enfichage (SA).
